# EUROPÄISCHE PATENTSCHRIFT

(11) **EP 2 144 494 B1**
(45) Veröffentlichungstag und Bekanntmachung des Hinweises auf die Patenterteilung: **30.03.2011**
(21) Anmeldenummer: 08750033.6
(22) Anmeldetag: 05.05.2008
(51) Int. Cl.: A01K 1/00, A01K 1/02, A01K 1/12

(54) **VORRICHTUNG ZUM BEWEGEN EINES POSITIONIERRAHMENS SOWIE EINES FUTTERBEHÄLTERS AM MELKPLATZ**
DEVICE FOR MOVING A POSITIONING FRAME AND FEED CONTAINER AT A MILKING PARLOUR
DISPOSITIF DE DÉPLACEMENT D'UN CADRE DE POSITIONNEMENT ET D'UN RÉCIPIENT À FOURRAGE SUR UN POSTE DE TRAITE DE LAIT

(30) Priorität: 04.05.2007 DE 102007020880
(43) Veröffentlichungstag der Anmeldung: 20.01.2010
(73) Patentinhaber: GEA WestfaliaSurge GmbH, 59199 Bönen (DE)
(72) Erfinder: BÜCKER, Heinrich, 33449 Langenberg-Benteler (DE); SEGARCEANU-PASCU, Christian, 59229 Ahlen (DE); TECKENTRUP, Rolf, 33334 Gütersloh (DE)
(74) Vertreter: Neumann, Ditmar
(86) Internationale Anmeldenummer: PCT/EP2008/055471
(87) Internationale Veröffentlichungsnummer: WO 2008/135546

(56) Entgegenhaltungen:
- EP-A- 0 194 729
- WO-A-03/086057
- DE-U1- 9 409 372
- DE-U1- 9 422 333

## Beschreibung

Der Gegenstand der Erfindung bezieht sich auf eine Vorrichtung sowie auf einen Melkplatz zum Bewegen eines Positionierrahmens sowie eines Futterbehälters am Melkplatz.

Zum Melken von Tieren werden unterschiedliche Melkanlagen verwendet, die unterschiedlich konzeptioniert sind. Die Melkanlage kann Melkvorrichtungen aufweisen, welche halbautomatisch, vollautomatisch sowie robotergestützt arbeiten. Der Melkvorgang wird am Melkplatz durchgeführt. Es sind Melkanlagen bekannt, bei denen mehrere Melkplätze stationär oder beweglich angeordnet sind. Zu beweglichen Melkanlagen zählt beispielsweise das Melkkarussell. Es ist eine Ausführungsform eines Melkkarussells bekannt, bei der auf der Plattform des Melkkarussells am äußeren Plattformradius für jeden Melkplatz ein kippbares Element angeordnet ist. Dieses Element besteht im Wesentlichen aus scharnierförmigen Verbindungselementen zur Befestigung am Melkkarussell, einer Fixiervorrichtung für Tiere, einem Futterbehälter, einem Ver- bzw. Entriegelungsmechanismus für die Fixiervorrichtung und einer Stützrolle. Die kippbaren Elemente werden während des Melkens mittels einer Stützrolle und einer sich in Umfangsrichtung des Melkkarussells verlaufenden Kurvenschiene in einer Normalposition gehalten, das heißt in einer Position, in der ein Melken und Füttern des Tieres erfolgt.

Im Bereich der Karussellabgangsbrücke für Tiere wird die Kurvenschiene mit einem Gefälle auf ein definiertes Niveau abgesenkt und im Bereich der Zugangsbrücke mit einer Steigung auf ein Normalniveau gebracht. Dadurch, dass die Stützrolle des kippbaren Elementes dem Verlauf der Kurvenschiene folgt, kippt das Element mitsamt der Fixiervorrichtung und dem Futterbehälter in eine Entleerungsposition, das heißt in eine Position, in der eine Entleerung des Futterbehälters im Zu- bzw. Abgangbereichs der Tiere erfolgt. In dieser abgekippten Position folgt das Element unterhalb der Zu- bzw. Abgangsbrücke für Tiere der Karussellbewegung. Durch das Abkippen des Elementes wird einerseits dem Tier der Abgang vom bzw. Zugang zum Melkkarussell ermöglicht, andererseits wird auch eventuell vorhandenes Restfutter aus dem Futterbehälter ausgekippt.

In Fahrtrichtung des Karussells betrachtet befindet sich vor einem Abgangsbereich der Tiere eine weitere Kurvenschiene, mittels welcher die Fixiervorrichtung für Tiere entriegelt wird. Hierdurch werden Kopf und Hals des Tieres freigegeben. Nach dem Zugangsbereich der Tiere wird das Element mittels der Kurvenschiene und der Stützrolle des Elementes wieder in die Normalposition gebracht. Nachdem ein Tier das Melkkarussell über die Zugangsbrücke betreten hat, steckt das Tier seinen Kopf bis zum Hals durch die offene Fixiervorrichtung um an das Futter im Futterbehälter zu gelangen. Hierbei löst das Tier einen Verriegelungsmechanismus aus. Das Tier wird in dieser Position zum Melken fixiert.

Die Drehgeschwindigkeit des Melkkarussells ist im Wesentlichen konstant eingestellt, so dass die Problematik entsteht, dass nach einem Umlauf des Melkkarussells gegebenenfalls ein Tier noch nicht vollständig ausgemolken ist. In einem solchen Fall muss das Karussell so lange angehalten werden, bis das Tier ausgemolken worden ist.

Bei dem vorstehend genannten Karusselltyp handelt es sich um einen sogenannten Innenmelker. Bekannt sind auch sogenannte Außenmelker. Bei einer solchen Ausführungsform eines Melkkarussells sind auf der Plattform des Melkkarussells je Tier eine Melkbox und eine Equipmentbox für die Unterbringung von technischen Geräten, Einrichtungen oder desgleichen angeordnet. Am inneren Plattformradius ist für jeden Melkplatz ein Element vorgesehen, welches im Wesentlichen aus einer Fixiervorrichtung für Tiere und einem zugehörigen Ver- bzw. Entriegelungsmechanismus besteht. Weiterhin sind am inneren Karussellradius im Kopfbereich der Tiere vorstehende Futterbehälter rinnenförmig angeordnet. Diese sind fest mit dem Melkstandgerüst verbunden. Eventuell vorhandenes Restfutter kann nicht automatisch ausgeworfen werden. Die Säuberung der Futterschalen gestaltet sich schwierig und muss manuell durchgeführt werden.

In DE 940 9372 U2 ist eine solche Vorrichtung offenbart.

Hiervon ausgehend liegt der vorliegenden Erfindung die Aufgabe zugrunde, eine Vorrichtung zum Bewegen eines Positionierrahmens sowie eines Futterbehälters am Melkplatz anzugeben, welche mit einem geringen technischen Aufwand realisiert werden kann.

Diese Aufgabe wird erfindungsgemäß durch eine Vorrichtung zum Bewegen eines Positionierrahmens sowie eines Futterbehälters am Melkplatz mit den Merkmalen des Anspruchs 1 gelöst. Vorteilhafte Weiterbildungen und Ausgestaltungen der Vorrichtung sind Gegenstand der Unteransprüche.

Die erfindungsgemäße Vorrichtung zum Bewegen eines Positionierungsrahmens sowie eines Futterbehälters am Melkplatz zeichnet sich dadurch aus, dass wenigstens eine mit dem Positionierungsrahmen oder dem Futterbehälter zusammenwirkende Bewegungseinheit vorgesehen ist, wobei der Positionierungsrahmen und der Futterbehälter über wenigstens ein Verbindungselement derart miteinander verbunden sind, dass der Positionierungsrahmen und der Futterbehälter im Wesentlichen synchron bewegt werden.

Durch diese erfindungsgemäße Ausgestaltung der Vorrichtung wird mit einem geringen technischen Aufwand sichergestellt, dass der Positionierungsrahmen und der Futterbehälter im Wesentlichen synchron bewegt werden. Dies bedeutet, dass mittels des Positionierungsrahmens das Tier am Melkplatz entsprechend begrenzt, insbesondere fixiert wird. Mit der Begrenzung des Melkplatzes für das Tier wird ihm auch, dem Tier, der Futterbehälter so bereitgestellt, dass das Tier während eines Melkvorgangs eine Futteraufnahme durchführen kann. Ist der Melkvorgang beendet, so wird der Positionierungsrahmen so bewegt, dass der Melkplatz freigegeben wird. Gleichzeitig wird auch der Futterbehälter entfernt, so dass das Tier nicht mehr fressen kann, wenn der Melkvorgang beendet wird.

Mit der Bereitstellung von Futter am Melkplatz soll einerseits der Zutritt der Tiere zum Melkplatz hin beschleunigt werden und andererseits kann aber auch eine leistungsgerechte Futterzuteilung erfolgen. Dadurch, dass der Positionierungsrahmen und der Futterbehälter synchron bewegt werden, wird auch ein manuelles Entleeren bzw. Säubern des Futterbehälters vermieden.

Gemäß einer vorteilhaften Ausgestaltung der Erfindung wird vorgeschlagen, dass das wenigstens eine Verbindungselement ein im Wesentlichen starr ausgebildetes Element ist. Hierbei kann es sich beispielsweise um eine Stange, Leiste oder dergleichen handeln, wobei eine im Wesentlichen rohrförmige Ausbildung des Verbindungselementes bevorzugt wird, da bei einem geringen Gewicht eine hohe Festigkeit, insbesondere Biegefestigkeit erreicht wird.

Die Vorrichtung ist insbesondere so ausgebildet, dass es sich bei der Bewegungseinheit um wenigstens eine Zylinder-Kolben-Einheit handelt. Die Zylinder-Kolben-Einheit kann pneumatisch oder hydraulisch betrieben werden. Die Bewegungseinheit ist vorzugsweise mit einer Steuerung verbunden, so dass mittels der Steuerung zumindest die Bewegungseinheit gesteuert werden kann.

Alternativ kann es sich bei der Bewegungseinheit um wenigstens eine elektromotorische Einheit handeln, insbesondere um einen Schrittmotor.

Gemäß einer noch weiteren vorteilhaften Ausgestaltung der Vorrichtung wird vorgeschlagen, dass die Bewegungseinheit wenigstens eine Laufschiene und wenigstens eine mit der mindestens einen Laufschiene zusammenwirkende Laufrolle umfasst. Die Laufschiene hat eine solche Form, dass durch die Relativbewegung zwischen der Laufschiene und der Laufrolle eine vorgegebene Bewegung erreicht wird, welche auf den Positionierungsrahmen und/oder auf den Futterbehälter übertragen wird.

Besonders bevorzugt ist dabei eine Ausgestaltung der Laufschiene derart, dass die Laufschiene einen ersten nach unten geneigten Abschnitt, einen zweiten im Wesentlichen horizontal ausgebildeten Abschnitt und einen dritten nach oben steigenden Abschnitt aufweist. Die Laufrolle kommt dabei zur Anlage an die Unterseite der Laufschiene, so dass eine entsprechende Kippbewegung während der Relativbewegung zwischen der Laufschiene und der Laufrolle erreicht wird.

Gemäß einer noch weiteren vorteilhaften Ausgestaltung der Vorrichtung wird vorgeschlagen, dass eine Betätigungseinrichtung vorgesehen ist, mittels derer die mindestens eine Laufschiene und/oder die wenigstens eine Laufrolle in Eingriff oder außer Eingriff bringbar sind. Durch diese Maßnahme kann in Abhängigkeit von dem gewünschten Ziel eine Bewegung eines Positionierungsrahmens sowie eines Futterbehälters am Melkplatz durchgeführt oder unterbunden werden.

Die Betätigungsvorrichtung für die Laufschiene umfasst vorzugsweise eine Zylinder-Kolben-Einheit, welche vorzugsweise mit einer speziellen Steuerung signaltechnisch verbunden ist, so dass eine Automatisierung der Betätigungseinrichtung erreicht werden kann.

Nach einem noch weiteren erfinderischen Gedanken wird ein Melkplatz umfassend eine Vorrichtung zum Bewegen eines Positionierungsrahmens sowie eines Futterbehälters am Melkplatz vorgeschlagen, der sich dadurch auszeichnet, dass wenigstens eine mit dem Positionierungsrahmen oder dem Futterbehälter zusammenwirkende Bewegungseinheit vorgesehen ist, wobei der Positionierungsrahmen und der Futterbehälter über wenigstens ein Verbindungselement derart miteinander verbunden sind, dass der Positionierungsrahmen und der Futterbehälter im Wesentlichen synchron bewegt werden. Die Vorrichtung ist vorzugsweise nach einem der Ansprüche 2 bis 10 ausgebildet.

Gemäß einem noch weiteren erfinderischen Gedanken wird eine Karussell-Melkvorrichtung mit einer Karussellplattform und mit auf der Karussellplattform angeordneten Melkplätzen vorgeschlagen, die sich dadurch auszeichnet, dass wenigstens ein Melkplatz eine Vorrichtung zum Bewegen eines Positionierungsrahmens sowie eines Futterbehälters am Melkplatz aufweist, wobei das wenigstens eine mit dem Positionierungsrahmen oder dem Futterbehälter zusammenwirkende Bewegungseinheit vorgesehen ist, wobei der Positionierungsrahmen und der Futterbehälter über wenigstens ein Verbindungselement derart miteinander verbunden sind, dass der Positionierungsrahmen und der Futterbehälter im Wesentlichen synchron bewegt werden.

Gemäß einer vorteilhaften Ausgestaltung der Karussell-Melkvorrichtung wird vorgeschlagen, dass die Vorrichtung zum Bewegen eines Positionierungsrahmens sowie eines Futterbehälters am Melkplatz nach einem der Ansprüche 2 bis 10 ausgebildet ist.

Gemäß einer noch weiteren vorteilhaften Ausgestaltung der Karussell-Melkvorrichtung wird vorgeschlagen, dass wenigstens eine Sensoreinheit im Ein-und/oder im Ausgangsbereich der Karussell-Melkvorrichtung vorgesehen ist, welche signaltechnisch mit einer Steuerung verbunden ist. Durch diese Sensoreinheit wird die Vorrichtung zum Bewegen eines Positionierungsrahmens sowie eines Futterbehälters aktiviert oder deaktiviert.

Die Laufschiene ist bei einer Karussell-Melkanlage vorzugsweise im Wesentlichen im Ein- und im Ausgangsbereich der Karussell-Melkvorrichtung vorgesehen.

Durch den Positionierungsrahmen wird das Tier, welches sich am Melkplatz befindet, bis zum Melkende zurückgehalten. Ist ein Tier im Ausgangsbereich nicht ausgemolken, so kann der Positionierungsrahmen geschlossen bleiben, insbesondere dann, wenn die Vorrichtung zum Bewegen eines Positionierungsrahmens sowie eines Futterbehälters eine Betätigungseinrichtung umfasst, mittels derer die mindestens eine Laufschiene und/oder die wenigstens eine Laufrolle in Eingriff oder außer Eingriff bringbar sind.

Dadurch, dass wenigstens ein Verbindungselement vorgesehen ist, welches den Positionierungsrahmen und den Futterbehälter verbindet, kann auf zusätzliche separate und gegebenenfalls technologisch aufwändige Betätigungsvorrichtungen im Wesentlichen verzichtet werden. Hierdurch lassen sich Material- und Lohnkosten einsparen. Die Betätigung des Positionierungsrahmens und des Futterbehälters stehen in einem direkten, funktionalen Zusammenhang, wobei der synchrone Ablauf dieser beiden Teilfunktionen vorzugsweise durch direkte mechanische Verbindung sicher gewährleistet wird.

Dadurch, dass ein Positionierungsrahmen zum Einsatz kommt, werden die Melkabläufe nicht dadurch gestört, dass Melkzeuge im Ausgangsbereich des Melkkarussells von Tieren abgerissen werden, obwohl die Tiere noch nicht ausgemolken sind. Die Anordnung einer Laufschiene lediglich im Ein- und/oder im Ausgangsbereich hat den Vorteil, dass teure Vorrichtungen zum Entsperren bzw. Sperren bzw. zum Ab- und Hochkippen eines Frontelementes der Tiere nicht notwendig ist. Im Vergleich zu Karussell-Melkvorrichtungen mit feststehenden Futterschalen wird das Kommulieren von Futterresten mit den bekannten Folgen und/oder die erforderliche manuelle Entleerung vermieden.

Durch die Erfindung wird erreicht, dass insbesondere bei Karussell-Melkvorrichtungen der Futterbehälter und der Positionierungsrahmen im Ein- bzw. Ausgangsbereich in der Normalposition verbleiben, wenn Tiere nicht ausgemolken sind und deswegen beispielsweise bei einer Karussell-Melkvorrichtung mindestens eine zweite Runde fahren müssen. Darüber hinaus wird sichergestellt, dass der Futterbehälter und der Positionierungsrahmen mittels des Verbindungselementes stets in die jeweilige erforderliche Position gebracht werden.

Die funktionale Ausgestaltung des Futterbehälters, des Positionierungsrahmens sowie des Verbindungselementes ist vorzugsweise als ein Gelenksystem ausgebildet, welches so gestaltet ist, dass durch die wirkenden Momente die Bewegung des Futterbehälters und/oder des Positionierungsrahmens mit einer geringen Kraft und somit auch einem geringen Energieeinsatz erreicht werden kann.

Hierzu wird insbesondere das Gewicht bzw. die Gewichtskraft des Positionierungsrahmens genutzt, den Futterbehälter und den Positionierungsrahmen von einer Entleerungsposition in eine Normalposition zu bewegen und die beiden Bauteile in der Normalposition stabil zu belassen. Bevorzugt ist dabei eine Ausgestaltung, bei der der Drehpunkt des Positionierungsrahmens so gewählt ist, dass einerseits für das Aufschwenken des Positionierungsrahmens insbesondere mittels der Laufschiene möglichst wenig Kraft erforderlich ist und andererseits der Positionierungsrahmen aufgrund seines Eigengewichts stabil in der Normalposition verbleibt.

In den Futterbehälter kann Futter und/oder Futterzusatzstoffe oder sonstige Stoffe gebracht werden, die für ein Tier geeignet sind. Hierzu kann eine entsprechende Dosiervorrichtung vorgesehen sein. Die Dosiervorrichtung kann vorteilhafterweise mit einer Steuereinrichtung verbunden sein, mittels der tierindividuelle Mengen abgegeben werden. Hierzu weisen die Tiere Identifikationsmittel auf, die entsprechend ausgelesen werden. Die Identifikation der Tiere kann im Zugangsbereich zum Melkplatz oder am Melkplatz selbst erfolgen.

Weitere Vorteile und Einzelheiten der Erfindung werden anhand der in der Zeichnung dargestellten Ausführungsbeispiele erläutert, ohne dass der Gegenstand der Erfindung auf diese Ausführungsbeispiele beschränkt wird.

Es zeigen:
- Fig. 1:: ein erstes Ausführungsbeispiel der Erfindung in einer Seitenansicht in einer Normalposition,
- Fig. 2:: den Melkplatz nach Fig. 1 in einer Entleerungsposition,
- Fig. 3:: schematisch einen Melkplatz in einer Draufsicht,
- Fig. 4:: ein zweites Ausführungsbeispiel der Erfindung in einer Entleerungsposi- tion,
- Fig. 5:: das Ausführungsbeispiel nach Fig. 4 in einer Normalposition,
- Fig. 6:: schematisch einen Futterbehälter in einer Normalposition,
- Fig. 7:: schematisch und in einer Draufsicht einen Melkplatz eines Melkkarus- sells,
- Fig. 8:: schematisch ein drittes Ausführungsbeispiel eines Melkplatzes eines Melkkarussells,
- Fig. 9:: ein Ausführungsbeispiel einer Laufschiene,
- Fig. 10: ein weiteres Ausführungsbeispiel der Erfindung in einer Seitenansicht in einer Normalposition,
- Fig. 11: den Melkplatz nach Fig. 10 in der Entleerungsposition,
- Fig. 12: ein weiteres Ausführungsbeispiel der Erfindung in einer Seitenansicht mit einer Schutzvorrichtung,
- Fig. 13: schematisch das Detail "X" der Fig. 10,
- Fig. 14: das Gelenk 36 für Laufrolle in Normal- bzw. Durchfahrposition und
- Fig. 15: schematisch ein Ausführungsbeispiel für eine Laufschiene.

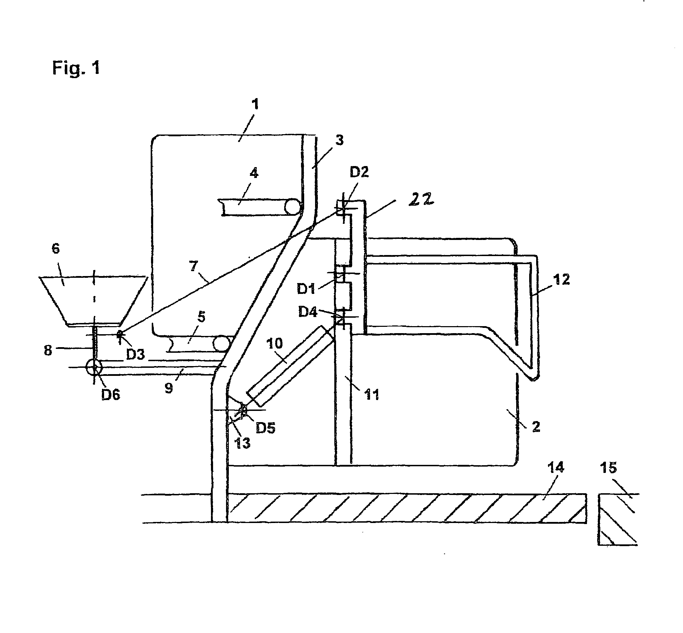

Fig. 1 zeigt schematisch ein erstes Ausführungsbeispiel eines Melkplatzes eines Melkkarussells in einer Seitenansicht und im Schnitt. Das Melkkarussell weist eine Karussellplattform 14 auf, welche über nicht dargestellte Antriebsmittel bewegbar ist. Auf der Karussellplattform 14 ist eine Mehrzahl von Melkplätzen vorgesehen, die die Tiere über einen Zugangsbereich betreten und über einen Abgangbereich verlassen können. Zum Vereinfachen des Betretens bzw. des Verlassens der einzelnen Melkplätze ist eine Brücke 15 vorgesehen.

Der Melkplatz ist so ausgebildet, dass ein Tier am Melkplatz begrenzt und gehalten wird. In dem dargestellten Ausführungsbeispiel weist der Melkplatz eine Trennwand 1 auf, die im Kopfbereich eines Tieres positioniert ist. Eine zweite Trennwand 2 begrenzt den Melkplatz im Rumpfbereich des Tieres. Die Trennwände 1 und 2 sind mit einem Pfosten 3 verbunden. Mit dem Pfosten 3 ist ein Nackenrohr 4 und ein Brustrohr 5 verbunden. Das Nackenrohr 4 und das Brustrohr 5 bilden zugleich einen Teil eines Karussellgerüstes.

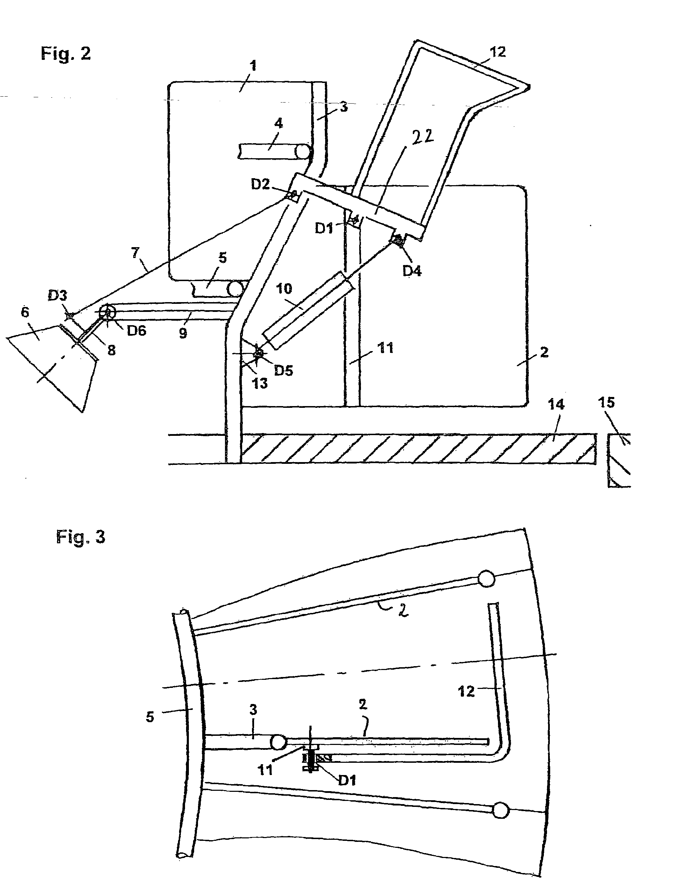

Aus dem dargestellten Ausführungsbeispiel ist ersichtlich, dass ein Positionierrahmen 12 vorgesehen ist. Der Positionierrahmen 12 ist im Wesentlichen L-förmig ausgebildet, so dass der kurze Schenkel des Positionierrahmens 12 ein Tier in Richtung des Außenumfangs des Melkkarussells betrachtet begrenzt. Der Positionierrahmen 12 ist mit einem Tragarm 22 verbunden, der im Wesentlichen vertikal angeordnet ist. Der Tragarm 22 ist mit der Trennwand 2 gelenkig verbunden. Mit dem Bezugszeichen 11 ist ein Verstärkungselement bezeichnet, welches zur Verbindung des Tragarms 22 mit der Trennwand 2 vorgesehen ist. Der Positionierungsrahmen 12 ist um eine im Wesentlichen horizontal verlaufende Achse D1 verschwenkbar. In der Fig. 1 ist der Positionierrahmen 12 in einer Normalposition dargestellt. In der Fig. 2 ist der Positionierrahmen 12 nach oben hin in einer vertikalen Ebene ausgeschwenkt. In dieser Position des Positionierrahmens wird der Melkplatz freigegeben, so dass ein Tier, welches sich auf dem Melkplatz befindet, diesen verlassen kann. In dieser Position kann auch ein Tier, wenn der Melkplatz frei ist, den Melkplatz betreten.

Vorzugsweise ist an einem jeden Melkplatz des Melkkarussells jeweils wenigstens ein Futterbehälter 6 vorgesehen. Der Futterbehälter 6 ist in der Normalposition so angeordnet, dass ein Tier, welches sich am Melkplatz befindet, einen freien Zugriff zum Inhalt des Futterbehälters 6 hat. Der Futterbehälter 6 ist über eine Tragkonstruktion mit dem Pfosten 3 verbunden.

Die Tragkonstruktion umfasst in dem dargestellten Ausführungsbeispiel einen ersten Tragarm 9, der im Wesentlichen horizontal angeordnet ist. Der Tragarm 9 ist mit einem ersten Ende mit dem Pfosten 3 verbunden. Das zweite Ende des Tragarms 9 ist mit einem zweiten Tragarm 8 verbunden, der mit dem Futterbehälter 6 verbunden ist. Der Tragarm 8 und der Tragarm 9 sind gelenkig um einen Drehpunkt D6 miteinander verbunden.

Mit dem Tragarm 22 ist eine Bewegungseinheit 10 verbunden. Bei der Bewegungseinheit 10 handelt es sich in dem dargestellten Ausführungsbeispiel nach Fig. 1 um eine Zylinder-Kolbeneinheit. Die Bewegungseinheit 10 ist über eine Lasche 13 mit dem Pfosten 3 verbunden. Die Bewegungseinheit 10 ist verschwenkbar an den Drehpunkten D4 bzw. D5 mit der Lasche bzw. dem Tragarm 22 verbunden. Die Bewegungseinheit 10 ist signaltechnisch mit einer nicht dargestellten Steuerung verbunden.

Der Futterbehälter 6 ist über ein Verbindungselement 7 mit dem Tragarm 22 verbunden. Mit den Bezugszeichen D2 und D3 sind die Drehpunkte des Verbindungselementes 7 mit dem Positionierungsrahmen 12 bzw. mit der Tragkonstruktion des Futterbehälters 6 bezeichnet.

Ist ein Tier ausgemolken und befindet sich der Melkplatz im Karussellausgangsbereich, so gibt eine nicht dargestellte Melkzeugabnahmeautomatik ein entsprechendes Steuersignal an eine nicht dargestellte Steuerung. Dieses Signal kann auch dazu genutzt werden, die Bewegungseinheit 10 zu aktivieren. Gegebenenfalls kann beispielsweise ein Schalter vorgesehen sein, der an einer definierten Stelle im Abgangsbereich des Melkkarussells angeordnet ist, um ein Signal an die Bewegungseinheit 10 zu liefern. Durch Aktivierung der Bewegungseinheit 10 wird der Positionierungsrahmen 12 um den Drehpunkt D1 in einer vertikalen Ebene verschwenkt. Hierdurch wird der Melkplatz nach hinten frei. Das Tier kann die Karussellplattform 14 über die Brücke 15 verlassen.

Durch die Schwenkbewegung des Positionierrahmens 12 wird auch der Futterbehälter 6 nach unten hin geschwenkt, wie dies aus der Fig. 2 ersichtlich ist. Eventuell sich im Futterbehälter 6 befindendes Futter kann in einem nicht dargestellten Futterauffangbehälter aufgefangen werden.

Bedingt durch die Drehbewegung der Karussellplattform 14 gelangt der leer gewordene Melkplatz vom Abgangsbereich in einen Zugangsbereich. Ein weiteres Tier kann den leeren Melkplatz betreten.

Ist der Zugangsbereich überfahren, so wird ein Signal geliefert, durch welches die Bewegungseinheit 10 aktiviert wird. Die Bewegungseinheit 10 führt den Positionierungsrahmen 12 in seine Normalstellung zurück, wie dies aus der Fig. 1 ersichtlich ist. Der Futterbehälter 6 wird durch das Verbindungselement 7 in die Ausgangsposition zurückbewegt.

In dem nach den Figuren 1 und 2 dargestellten Ausführungsbeispiel handelt es sich bei dem Verbindungselement 7 um ein starres Verbindungselement. Dies ist nicht zwingend notwendig. Wird der Tragarm 8 derart mit dem Futterbehälter 6 verbunden, dass der Futterbehälter aufgrund seiner Gewichtskraft ein entgegengesetzt zum Uhrzeigersinn gerichtetes Moment um die Drehachse D6 zeugt, so kann das Verbindungselement 7 auch flexibel ausgestaltet sein. Der Tragarm 8 und/oder der Tragarm 9 haben dann vorzugsweise einen entsprechenden Anschlag, um die Bewegung des Futterbehälters in Richtung des Pfostens 3 zu begrenzen.

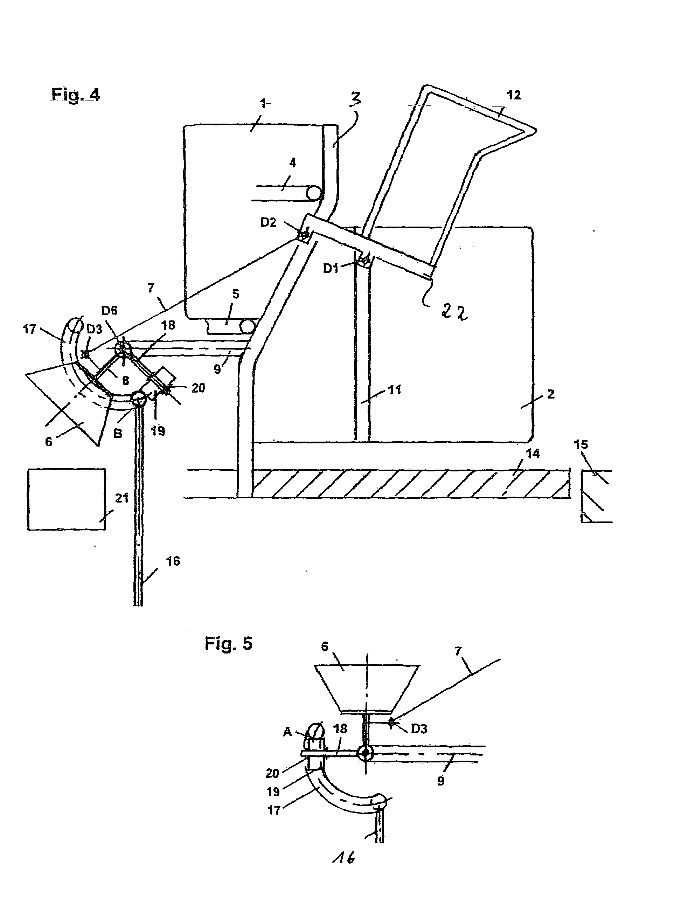

In Fig. 4 und 5 ist ein zweites Ausführungsbeispiel der Erfindung dargestellt. Der prinzipielle Aufbau eines Melkplatzes am Melkkarussell entspricht dem Aufbau des Melkplatzes gemäß den Figuren 1 bis 3 jedoch ohne Bewegungseinheit 10. Der Melkplatz ist seitlich durch zwei beabstandet zueinander ausgebildete Trennwände 2 begrenzt. Er weist ein Brustrohr 5 und ein Nackenrohr 4 auf. Im Kopfbereich ist wenigstens eine Trennwand 1 vorgesehen. Mit einer Trennwand 2 ist über einen Tragarm 22 ein Positionierungsrahmen 12 verbunden.

Ein Futterbehälter 6 ist über eine Tragkonstruktion mit einem Pfosten 3 verbunden. Die Tragkonstruktion umfasst einen im Wesentlichen horizontal ausgebildeten Tragarm 9, der gelenkig mit einem Tragarm 8 verbunden ist. Der Tragarm 8 ist mit seinem freien Ende mit dem Futterbehälter 6 verbunden.

Der Futterbehälter 6 ist über ein Verbindungselement 7 mit dem Tragarm 22 verbunden. Hierzu ist ein Verbindungselement 7 vorgesehen, welches mit seinem einen Ende am Drehpunkt D3 mit dem Tragarm 8 und am Drehpunkt D2 mit dem Tragarm 22 verbunden ist.

Die Baueinheit umfassend den Futterbehälter 6 und den Tragarm 8 ist mit einer Strebe 18 verbunden. Die Strebe 18 weist an ihrem freien Ende eine Laufrolle 19 auf. Die Laufrolle 19 ist mittels mindestens eines Positionierungselementes 20 positioniert und drehbar an der Strebe 18 angeordnet. Im Verfahrweg der Laufrolle 19 ist eine Laufschiene 17 vorgesehen. Die Laufschiene 17 weist einen ersten abfallenden Bereich auf, an welchen an sich ein zweiter im Wesentlichen horizontal verlaufender Bereich anschließt. An diesen Bereich schließt sich ein dritter Bereich an, der steigend ausgebildet ist. Die Neigung im ersten bzw. die Steigung im dritten Bereich der Schiene kann unterschiedlich sein. Bevorzugt ist jedoch eine Ausgestaltung der Schiene, bei der der Neigungswinkel im ersten Bereich und im dritten Bereich gleich sind. Bevorzugt ist dabei ein Winkel von ca. 30°. Der obere Punkt der Laufschiene ist mit A und der untere Punkt mit B bezeichnet.

Während der Verfahrbewegung des Karussells gelangt die Laufrolle 19 unter den ersten Bereich der Laufschiene 17. Im ersten Bereich ist die Laufschiene 17 nach unten hin geneigt, wodurch die Strebe 18 während des Verfahrweges nach unten gedrückt wird. Hierdurch wird die Baueinheit umfassend den Futterbehälter 6 und den Halter 8 aus der Normalposition in eine Entleerposition verschwenkt, wie dies in der Fig. 4 dargestellt ist. Während dieser Bewegung wird der Positionierrahmen 12 um den Drehpunkt Z verschwenkt und somit der Melkplatz geöffnet. Das Schwenken des Positionierunsgrahmens bzw. Futterbehälters wird hierbei durch die Vorwärtsbewegung des Karussells und die Leistung des Karussellantriebs gewährleistet. Eine zusätzliche Bewegungseinheit ist nicht erforderlich.

Die Laufrolle 19 fährt dann anschließend entlang des im Wesentlichen horizontal ausgebildeten Abschnittes der Schiene 17, so dass ein Tier den Melkplatz verlassen und der Melkplatz neu belegt werden kann. Im dritten Abschnitt der Laufschiene 17, der steigend ausgebildet wird, wird durch die weitere Bewegung des Karussells und durch die Gewichtskraft des Positionierungsrahmens 12 der Futterbehälter in die Normalposition zurück verschwenkt und der Positionierungsrahmen 12 nach unten hin verschwenkt. In der Normalposition nimmt der Futterbehälter die in der Fig. 5 dargestellte Position ein.

Die Laufschiene 17 kann unterschiedliche Querschnitte haben. Die Laufrolle 19 ist vorzugsweise an den Querschnitt der Laufschiene 17 angepasst. Bevorzugt ist eine Ausgestaltung, bei der die Laufschiene 17 eine im Wesentlichen konvexe Außenkontur und die Laufrolle eine entsprechend konkave Form hat. Bevorzugt ist dabei eine Ausgestaltung, bei der die Laufschiene einen im Wesentlichen kreisförmigen Querschnitt aufweist.

Weist die Laufschiene 17 einen im Wesentlichen rechteckförmigen Querschnitt auf, so ist die Laufschiene vorzugsweise so ausgestaltet, dass bei einer im Wesentlichen zylinderförmig ausgebildeten Laufrolle stets eine Linienberührung zwischen der Laufrolle und der Laufschiene vorhanden ist. Dies wird insbesondere dadurch erreicht, dass die Laufschiene in sich verdreht ist. Die Laufschiene ist vorzugsweise lediglich im Bereich des Karussellzu- bzw. -abgangs angeordnet. Die Laufschiene ist mit entsprechenden Befestigungsmitteln 16 gehaltert.

Mit dem Bezugszeichen 21 ist in der Fig. 4 ein Auffangbehälter gekennzeichnet, in dem Restfutter aufgefangen werden kann.

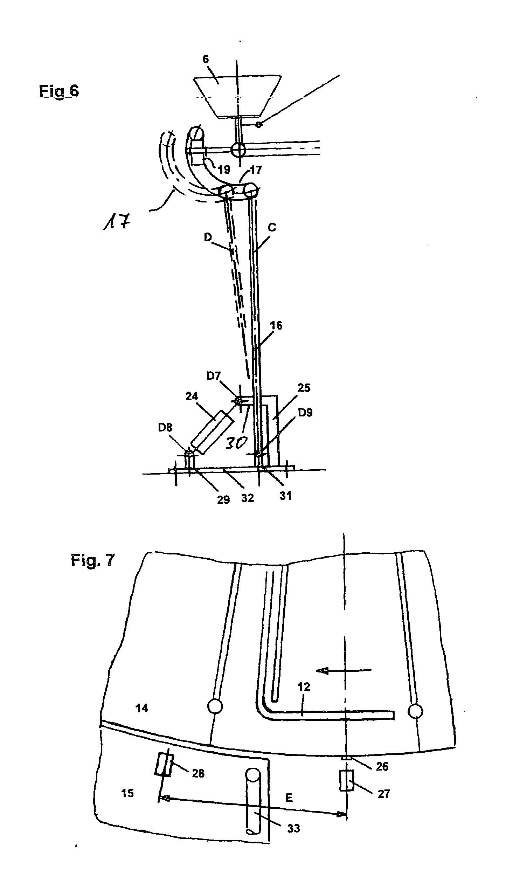

In den Figuren 6 und 7 ist eine noch weitere Ausführungsform der Erfindung dargestellt. Der grundsätzliche Aufbau der Ausführungsform nach Fig. 6 entspricht der Ausgestaltung der Vorrichtung nach Fig. 4 und 5.

In dem in der Fig. 6 dargestellten Ausführungsbeispiel ist eine Laufschiene 17 vorgesehen. Die Laufschiene 17 ist über Befestigungsmittel 16 gelenkig mit einer Grundplatte 32 verbunden. Hierzu ist ein Lager 31 vorgesehen, so dass das Befestigungsmittel 16 um den Drehpunkt D9 verschwenkbar ausgebildet ist. Zum Verschwenken des Befestigungsmittels 16 ist dieses mit einer Betätigungseinheit 24 verbunden. Bei der Betätigungseinheit 24 handelt es sich um eine Zylinder-Kolbeneinheit, welche mit ihrem hinteren Teil gelenkig mit der Grundplatte 32 mittels eines Halters 29 verbunden ist. In der Normalposition ist das Befestigungsmittel 16 im Wesentlichen vertikal ausgerichtet. Hierzu ist ein Anschlagmittel 25 vorgesehen. Die Normalposition wird durch die Betätigungseinheit 24 festgelegt.

Das Befestigungsmittel 16 kann aus der Normalposition in die in der Fig. 6 gestrichelt dargestellte Position D ausgeschwenkt werden. In dieser Position greift die Laufrolle 19 nicht unter die Laufschiene 17, so dass ein Öffnen des Melkplatzes bzw. Abschwenken des Futterbehälters 6 nicht erfolgt.

Die Betätigungseinheit 24 wird durch eine Steuerung angesteuert, so dass die Befestigungseinrichtung 16 entweder in der Normalposition verbleibt oder aus dieser ausgeschwenkt wird. Weist das Melkkarussell eine Melkzeugabnahmevorrichtung auf, so kann ein Aktivierungssignal an die Betätigungseinheit 24 dann ausgegeben werden, wenn ein Melkzeug von einer Abnahmevorrichtung im Ausgangsbereich noch nicht abgenommen wurde und ein zweites Aktivierungssignal, wenn das Karussell eine definierte Strecke nach dem Erzeugen des ersten Aktivierungssignals überfahren hat. Diese Strecke ist in der Fig. 7 mit dem Bezugszeichen E bezeichnet. Mit dem ersten Aktivierungssignal wird die Laufschiene in eine Durchfahrposition D nach Fig. 6 und mit dem zweiten Aktivierungssignal in die Normalposition C nach Fig. 6 geschwenkt.

Weist das Melkkarussell keine Melkzeugabnahmevorrichtung auf, so wird das Melkzeug manuell abgenommen. Der Melker markiert die Melkbox, in der das Melkzeug nicht abgenommen wurde, beispielsweise mittels eines Magneten 26 am Melkplatz. Der Magnet 26 gelangt bei vorwärts fahrendem Karussell in einen Sensorbereich eines ersten Sensors 27, welcher ein Signal an eine nicht dargestellte Steuerung leitet. Die Steuerung generiert nun ein Aktivierungssignal für das Betätigungselement 24 und die Laufschiene wird in eine Durchfahrposition D geschwenkt. Hierdurch gelangt die Laufrolle 19 nicht in Eingriff mit der Laufschiene 17. Der Futterbehälter 6 sowie der Positionierungsrahmen 12 verbleiben in der Normalposition. Das noch nicht ausgemolkene Tier kann die Karussellplattform 14 nicht verlassen.

Bei weiter fahrendem Karussell gelangt der Magnet 26 nach der Fahrstrecke E in den Sensorbereich eines zweiten Sensors 28. Hierdurch wird wiederum ein Aktivierungssignal an das Betätigungselement 24 ausgegeben und die Laufschiene 17 wird wieder in ihre Normalposition C geschwenkt.

Der Magnet 26 wird im Eingangsbereich der Tiere von dem Melker, welcher die Melkzeuge ansetzt, entfernt.

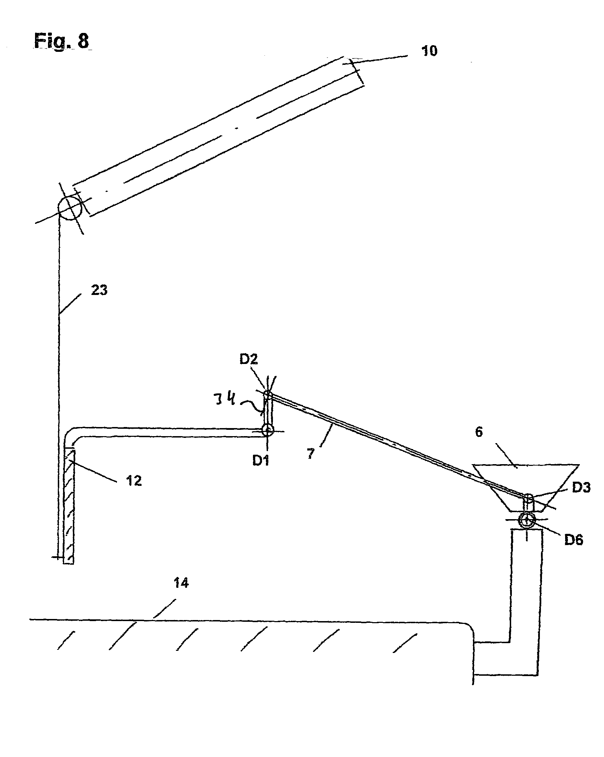

Eine noch weitere Ausführungsform der Erfindung ist in der Fig. 8 schematisch dargestellt. Die Darstellung zeigt schematisch eine Karussellplattform 14. Der besseren Übersicht wegen ist auf die Darstellung der Begrenzung der Melkplätze verzichtet worden. Fig. 8 zeigt einen Positionierungsrahmen 12. Der Positionierungsrahmen 12 ist um den Drehpunkt D1 nach oben hin verschwenkbar. Mittels eines Armes 34, der starr mit dem Positionierungsrahmen 12 verbunden ist, ist ein Verbindungselement 7 gelenkig mit dem Arm 34 verbunden. Das Verbindungselement 7 ist gelenkig mit einem um den Drehpunkt D6 verschwenkbaren Futterbehälter 6 verbunden.

Oberhalb des Melkplatzes ist eine Bewegungseinheit 10 vorgesehen, welches mit einem Zugseil 23 verbunden ist. Das Zugseil 23 ist mit dem Positionierungsrahmen 12 verbunden.

Bei der Bewegungseinheit 10 handelt es sich vorzugsweise um eine Zylinder-Kolbeneinheit, insbesondere um einen Vakuumzylinder. Bei einer Beaufschlagung des Vakuumzylinders mit Vakuum wird mittels des Zugseils 23 der Positionierungsrahmen 12 nach oben hin bewegt und um den Drehpunkt D1 verschwenkt. Gleichzeitig wird der Futterbehälter 6 in die Entleerungsposition gedrückt und nach unten gekippt. Wird der Vakuumzylinder belüftet, so gehen Positionierungsrahmen 12 und Futterbehälter 6 wieder zurück in die Normalposition.

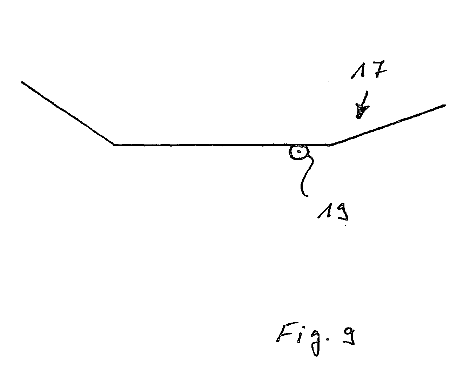

In der Fig. 9 ist schematisch und in einer Vorderansicht eine Laufschiene 17 dargestellt. Die Laufschiene 17 ist im Eingangs- und Ausgangsbereich des Melkkarussells angeordnet. Sobald jeder einzelne Melkplatz mit seinem Futterbehälter 6 und der hieran über die Strebe 18 angebrachten Laufrolle 19 zu der Stelle gelangt, an dem die Laufschiene 17 angebracht ist, wird die Laufrolle 19 aufgrund der Formgestaltung der Laufschiene 17 nach unten gedrückt, so dass der Futterbehälter 6 entleert wird.

Fig. 9 zeigt hierbei, dass die Laufschiene 17 einen ersten nach unten geneigten Abschnitt aufweist, durch den in Fahrtrichtung der Karussellplattform die Laufrolle 19 nach unten gedrückt wird. Hieran anschließend verbleibt die Laufrolle 19 auf einem bestimmten Höhenniveau, welches durch den im Wesentlichen horizontalen Abschnitt der Laufschiene 17 bewerkstelligt wird. Bei einer Weiterfahrt der Karussellplattform rollt die Laufrolle 19 an dem nach oben geneigten Abschnitt der Laufschiene 17, so dass der Futterbehälter 6 in seine Ausgangslage zurückkehren kann.

In dem dargestellten Ausführungsbeispiel läuft die Laufrolle 19 unterhalb der Laufschiene, dies ist nicht zwingend notwendig. Andere Ausgestaltungen sind gleichfalls möglich. Es können auch beispielsweise zwei Laufrollen vorgesehen sein, zwischen denen die Laufschiene 17 eingreift. Durch entsprechende Ausgestaltung der Anordnung der Strebe 18 und der Laufrolle 19 kann die Laufrolle 19 auch oberhalb der Laufschiene geführt werden, wobei dann die Krümmung der Laufschiene 17 entsprechend angepasst ist.

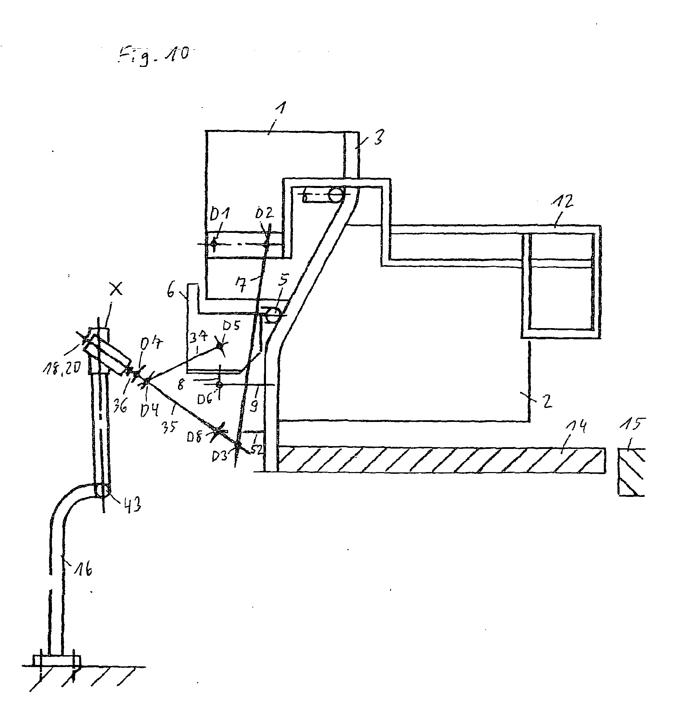

Ein weiteres Ausführungsbeispiel der erfindungsgemäßen Vorrichtung ist in der Fig. 10 dargestellt. Bei diesem Ausführungsbeispiel weist jeder Melkplatz eine Trennwand 1 im Kopfbereich und eine Trennwand 2 im Bauchbereich auf. Beide Trennwände 1, 2 des Melkplatzes sind mit einem Pfosten 3 des Karussellgerüstes verbunden.

Zu Verstärkung des Karussellgerüstes ist ein umlaufendes Nackenrohr 4 vorgesehen, bei dem es sich vorzugsweise um ein Stahlrohr handelt. Das Nackenrohr 4 dient auch zur Begrenzung der Bewegungsfreiheit der Tiere nach oben.

Ein umlaufendes Brustrohr 5 dient einerseits als Verstärkung des Karussellgerüsts und anderseits als Begrenzung der Bewegungsfreiheit der Tiere nach unten bzw. vorn.

Zum Melken betreten die Tiere die Karussellplattform 14 über eine Brücke 15.

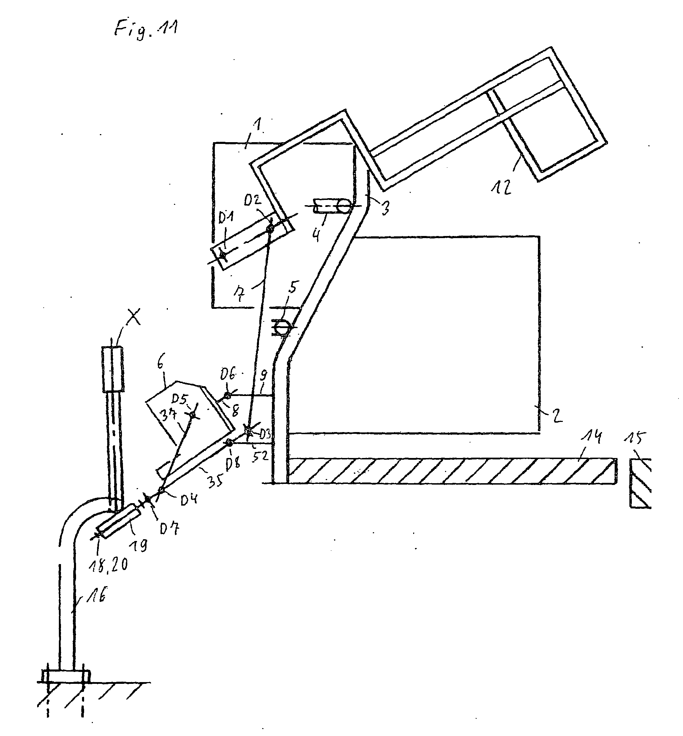

Zum Positionieren bzw. Freigeben der Tiere auf dem Melkkarussell ist an jedem Melkplatz ein Positionierungsrahmen 12 angeordnet, welcher nach Bedarf um den Drehpunkt D1 von der Normalposition in eine Entleerungsposition geschwenkt wird - und wieder zurück. In der Darstellung nach Fig. 10 befindet sich der Positionierungsrahmen 12 in der Normalposition. Fig. 11 zeigt den Positionierungsrahmen 12 in der Entleerungsposition bzw. in der Position, in der ein Tier den Melkplatz betreten kann.

Der Drehpunkt D1 ist an einem Halteelement vorgesehen, welches fest mit der Trennwand 1 verbunden ist.

Für die Aufnahme von Futtermittel, insbesondere von Lock- und/oder Leistungsfutter ist an jedem Melkplatz ein Futterbehälter 6 vorgesehen. Dieser ist auf einem Tragarm 8 befestigt. Der Futterbehälter 6 wird nach Bedarf um den Drehpunkt D6 von der Normalposition in eine Entleerungsposition geschwenkt - und wieder zurück, wie dies aus der Figur 10 bzw. aus der Figur 11 ersichtlich ist.

Der Drehpunkt D5 greift ein Verbindungselement 37 an, welches fest mit dem Futterbehälter 6 verbunden ist.

Ein Schwenken des Positionierungsrahmens 12 und des Futterbehälters 6 erfolgt mittels eines Hebelsystems, welches vom Verbindungselement 7, Tragarm 8 für Futterbehälter, Verbindungselement 37, Hebel 35 und den Drehpunkten D1, D2, D3, D4, D5, D6, D7, D8 gebildet wird.

Um Positionierungsrahmen 12 und Futterbehälter 6 gemeinsam in die erforderliche Position schwenken zu können, sind die jeweiligen Komponenten wie folgt gelenkförmig miteinander verbunden:
- der Positionierungsrahmen 12 mit einem Ende am Drehpunkt D1
- das Verbindungselement 7 mit seinem ersten Ende am Drehpunkt D2 und mit seinem zweiten Ende am Drehpunkt D3
- das Verbindungselement 37 mit seinem ersten Ende am Drehpunkt D4 und mit seinem zweiten Ende am Drehpunkt D5
- der Tragarm 8 mit dem Drehpunkt D6
- das Gelenk 36 für Laufrolle mit dem Drehpunkt D7
- der Hebel 35 mit dem Drehpunkt D8

Die am Drehpunkt D6 wirkenden Kräfte werden vom Tragarm 9 aufgenommen. Dieser ist hierzu an einem Ende fest mit dem Pfosten 3 des Melkstandgerüsts verbunden.

Die am Drehpunkt D8 wirkenden Kräfte werden vom Tragarm 52 aufgenommen. Dieser ist hierzu an einem Ende fest mit dem Standpfosten 3 des Melkstandgerüsts verbunden.

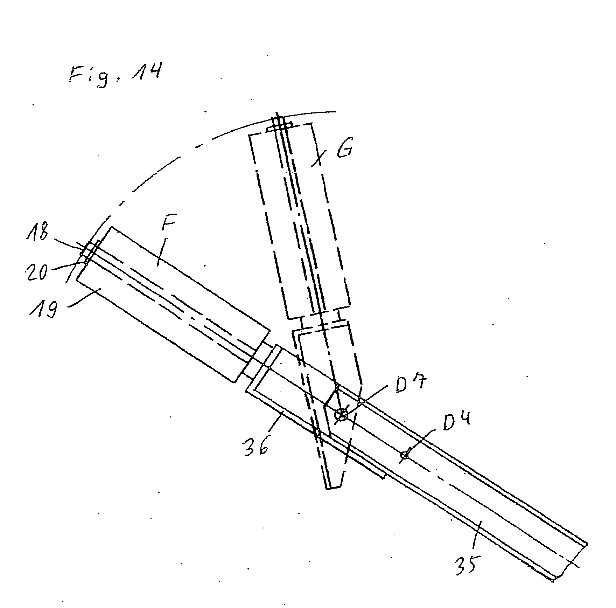

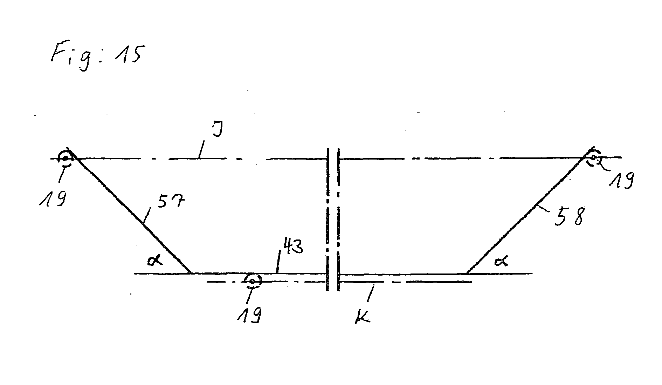

Die Betätigung des Gelenksystems erfolgt mittels eines nicht dargestellten Karussellantriebs, welcher das Karussell in eine Drehbewegung versetzt. Hierbei wird in Normfall/Regelfall eine Laufrolle 19 an einer Laufschiene 43 vorbei bewegt. Eine schematische Darstellung zeigt die Figur 15. Aufgrund der Gestaltung der Laufschiene 43 wird hierbei die Laufrolle 19, welche gelenkförmig mit einem Hebel 35 verbunden ist, beim Verfahren des Karussells zunächst von einer oberen Position "J" (= Normalebene) entlang einer schiefen Ebene 57 in eine untere Position "K" (= Entleerungsebene) gedrückt. Am Ende des waagerechten Teils der Laufschiene 43 bewegt sich die Laufrolle 19 entlang der schiefen Ebene 58 wieder von der Position "K" in die Position "J". Das Gelenk für Laufrolle 36 befindet sich hierbei in der Position "F", der Verfahrposition, wie dies aus der Figur 14 ersichtlich ist.

Mit Verfahren ist hier die Fahrtrichtung gemeint, in der sich das Karussell im Regelfall während des Melkens der Tiere bewegt. Die Drehrichtung des Karussells kann sowohl im - wie gegen den Uhrzeigersinn sein.

Wird die Laufrolle 19 aufgrund der Vorwärtsbewegung des Melkkarussells von der Pos. "J" in die Pos. "K" gedrückt, wird gleichzeitig der Positionierungsrahmen 12 nach oben geschwenkt und der Futterbehälter 6 nach unten. Befindet sich der Positionierungsrahmen 12 in der oberen Position (siehe Fig. 10 bzw. 11), kann das ausgemolkene Tier das Melkkarussell verlassen.

Futterbehälter 6 und Positionierungsrahmen 12 bleiben so lange in der Entleerungsposition, wie sich die Laufrolle 19 im waagerechten Bereich der Kurvenschiene 43 befindet.

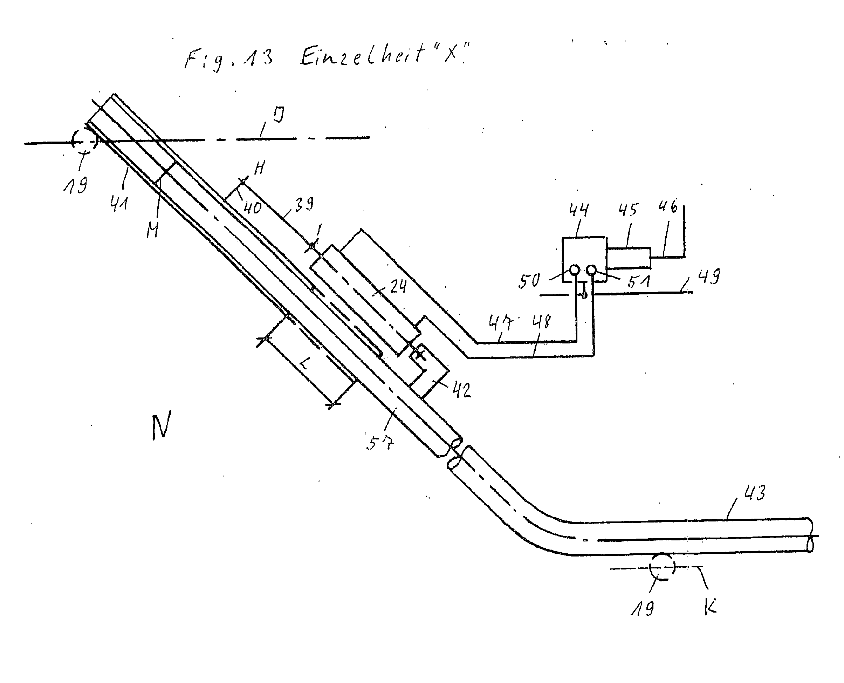

Ist ein Tier im Ausgangsbereich noch nicht ausgemolken, wird eine so genannte Durchfahrautomatik aktiviert (siehe Fig. 13). Hierdurch bleibt der Positionierungsrahmen 12 in der Normalposition und das betreffende Tier fährt automatisch eine zweite Runde. Der Melkprozess kann ohne Unterbrechung fortgesetzt werden.

Die Durchfahrautomatik ist im Ausgangsbereich an der schiefen Ebene 57 der Laufschiene 43 angeordnet. Die Durchfahrautomatik besteht im Wesentlichen aus folgenden Komponenten:
- einem Betätigungselement 24 mit Welle 39, welches mit dem Halter 42 verbunden ist
- einem Halter 42, welcher fest mit der schiefen Ebene 57 verbunden ist
- einem Rohr 41 mit Mitnehmer 40
- einem pneumatischen Umsteuerventil 44 mit einer Magnetspule 45, zwei Vakuumanschlüssen 50 und 51 und einem Kabel 46
- je einem Vakuumschlauch 47, 48
- einer Vakuumleitung 49 zur Versorgung des Umsteuerventils 44 mit Vakuum

Statt der hier aufgeführten Komponenten aus der Vakuumtechnik können auch Komponenten aus dem Druckluft- / Hydraulikbereich für die Durchfahrautomatik verwendet werden.

Die vorgenannte Durchfahrautomatik arbeitet wie folgt:

Das Umsteuerventil 44 ist auf der Vakuumleitung 49 befestigt und wird von dieser mit Vakuum versorgt. Das Kabel 46 ist mit einer nicht dargestellten Steuereinheit verbunden.

Im Normalbetrieb ist die Spule 45 des Umsteuerventils 44 spannungslos und das Betätigungselement 24 wird mittels des Vakuumschlauchs 47 mit Vakuum versorgt. Der Vakuumschlauch 48 ist entlüftet.

Hierdurch befindet sich das Verbindungsstück (z. B. Gabelstück) am Ende der Welle 39 in der Position "H" und das Rohr 41 in der Position "N" (=Normalposition).

Ist ein Tier im Ausgangsbereich nicht ausgemolken, wird dies mittels eines Sensors 27 (siehe Fig. 7) oder/und des Zentralrechners eines Herdenmanagement Systems erfasst. Der Sensor oder Zentralrechner sendet ein entsprechendes Signal an eine nicht dargestellte Steuerung. Diese Steuerung generiert daraufhin ein Aktivierungssignal, mittels welchem die Magnetspule 45 des Umsteuerventils 44 mit Spannung versorgt wird. Hierdurch steuert das Umsteuerventil 44 um. Das Betätigungselement 24 wird nun mittels des Vakuumschlauchs 48 mit Vakuum versorgt und der Vakuumschlauch 47 entlüftet. Dies bedeutet:

Die Welle 39 des Betätigungselements 24 bewegt sich von der Position "H" in die Position "I". Da Welle 39 und Mitnehmer 40 fest miteinander verbunden sind, wird das Rohr 41 um den Hub "L" zurück gezogen.

Befindet sich das Rohr 41 in der Position "M" (= Durchfahrposition), kann die Laufrolle 19 über eine erste schiefe Ebene 57 hinweg fahren, ohne die Laufschiene 43 bzw. das Rohr 41 zu berühren. Die Laufrolle 19 wird hierbei nicht nach unten gedrückt und der Positionierungsrahmen 12 verbleibt in der Normalposition.

Ist das Tier des nächsten Melkplatzes ebenfalls nicht ausgemolken, verbleibt die Durchfahrautomatik in der oben beschriebenen Position.

Ist das Tier des nächsten Melkplatzes ausgemolken, wird die Magnetspule 45 des Umsteuerventils 44 wieder spannungslos geschaltet. Hierdurch geht die Welle 39 wieder von der Pos. "I" in die Pos. "H" und somit das Rohr 41 von der Position "M" (= Durchfahrposition) wieder in die Position "N" (= Normalposition). Gelangt bei der Vorwärtsfahrt des Karussells die Laufrolle 19 in den Eingangsbereich, läuft sie gegen die zweite schiefe Ebene 58 der Laufschiene 43. Hierdurch werden die Laufrolle 19 und das Gelenk 36 für Laufrolle von der Pos. "F" in die Pos. "G" geschwenkt und der Positionierungsrahmen 12 verbleibt in der Normalposition (siehe Fig. 14).

Läuft die Laufrolle 19 der Melkbox, in welcher sich ein nicht ausgemolkenen Tier befindet, bei der Rückwärtsfahrt des Karussells auf die schiefe Ebene 57 der Laufschiene 43 im Ausgangsbereich, werden Laufrolle 19 und das Gelenk 36 für Laufrolle ebenfalls von der Pos. "F" in die Pos. "G" geschwenkt. Hierdurch wird gewährleistet, dass der Positionierungsrahmen 12 in der Normalposition verbleibt.

Die Laufschiene 43 erstreckt sich bei diesem Ausführungsbeispiel nur vom Karussellzugangs- bis zum Karussellabgangsbereich. Sie hat jeweils an ihrem ersten Ende eine schiefe Ebene 57 und an ihrem zweiten Ende eine schiefe Ebene 58 (siehe Fig. 15). Die Neigungen der schiefen Ebenen sind vorzugsweise gleich und haben vorzugsweise einen Winkel Alpha von z. B. 30° bis 45°.

Die beiden schiefen Ebenen 57, 58 und der waagerechte Teil der Laufschiene 43 befinden sich im Schwenkbereich der Laufrolle 19 (siehe Fig. 14).

Die Laufschiene 43 ist vorzugsweise mit zwei Befestigungsmitteln 16 verbunden. Die Befestigungsmittel 16 sind mittels üblicher Befestigungselemente auf dem Fußboden des Karussellraumes befestigt.

Die Laufrolle 19 wird durch mindestens ein Positionierungselement 20, welches auf der Welle 18 angeordnet ist, positioniert.

Bei dieser bevorzugten Ausführung wird die Normalposition des Positionierungsrahmens 12 und des Futterbehälters 6 durch das Eigengewicht des Positionierungsrahmens 12 erreicht. Dies bedeutet, dass Futterbehälter 6 und Positionierungsrahmen 12 außerhalb des Bereichs der Laufschiene 43 sich immer in der Normalposition befinden.

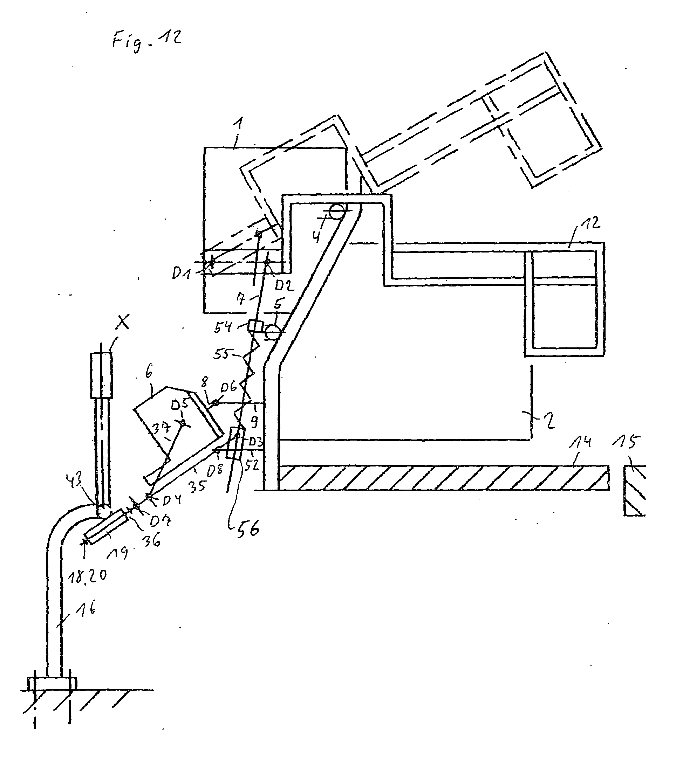

Fig. 12 zeigt ein weiteres Ausführungsbeispiel, welches sich von dem Ausführungsbeispiel gemäß Fig. 10 bzw. 11 dadurch unterscheidet, dass im Falle einer Störung eine Schutzvorrichtung vor mechanischen Schäden an dem für die Bewegung des Positionierungsrahmens 12 vorgesehenen Hebelsystems vorgesehen ist.

Mit der erwähnten Störung ist hier eine Überlastung gemeint, welche auftreten kann, wenn z. B. Tiere mit großer Kraft gegen den hinteren Teil des Positionierungsrahmens 12 drücken und gleichzeitig die Laufrolle 19 gegen die schiefe Ebene 57 der Laufschiene 43 gefahren wird. Dies kann unter anderem in Verbindung mit unruhigen Tieren auftreten, welche noch nie auf dem Karussell gemolken wurden (z. B. Einmelkphase).

Die vorgenannte Schutzvorrichtung besteht im Wesentlichen aus einem Stopper 54, einem Führungsstück 56 und einem Federelement 55.

Der Stopper 54, welcher auf dem Verbindungselement 7 angeordnet ist, dient als Anlage für ein erstes Ende eines Federelements 55. Das zweite Ende des Federelements 55 liegt an dem Führungsstück 56 an, welches seinerseits mittels des Drehpunkts D3 mit dem Hebel 35 verbunden ist.

Die Schutzvorrichtung arbeitet wie folgt:

Drückt z. B. ein Tier im Ausgangsbereich mit großer Kraft gegen den hinteren Teil des Positionierungsrahmens 12 und wird die Laufrolle 19 gegen die schiefe Ebene 57 der Laufschiene 43 gefahren, bewegt sich die Laufrolle 19 zusammen mit dem langen Teilstück des Hebels 35 um den Drehpunkt D8 nach unten und das kurze Teilstück des Hebels 35 mit seinem Drehpunkt D3 nach oben. Hierbei gleitet das Führungsstück 56 auf dem Verbindungsstück 7 nach oben.

Wird der Positionierungsrahmen 12 z. B. aufgrund einer von einem Tier aufgebrachten Zusatzkraft nicht unmittelbar nach oben geschwenkt, wird das Federelement 55 weiter zusammengerückt, wodurch sich die Federkraft erhöht.

Die maximale Kraft, welche bei diesem Ausführungsbeispiel auf diejenigen Teile wirken kann, welche für die Bewegung des Positionierungsrahmens 12 erforderlich sind, ist die einstellbare, maximale Federkraft des Federelements 55. Die maximale Federkraft wird dann erreicht, wenn sich die Laufrolle 19 unterhalb des waagerechten Teils der Laufschiene 43 und der Positionierungsrahmen 12 in der "Normalposition" befinden. In der Fig. 12 ist dieser Fall mittels Volllinien dargestellt.

In dem Moment, in welchem die von einem Tier aufgebrachte Zusatzkraft nicht mehr vorhanden ist, wird der Positionierungsrahmen 12 von der Federkraft des Federelements 55 nach oben gedrückt und das Tier kann das Melkkarussell verlassen. In der Fig. 12 ist dieser Fall mittels Strichlinien dargestellt.

Hat ein Tier im Ausgangsbereich des Melkkarussells seine Melkbox nicht verlassen, wird dies mittels eines Lichttasters / Zentralrechners erfasst und das Karussell angehalten. Die Störung kann dann beseitigt werden, ohne dass Schäden am Hebelsystem verursacht wurden.

Das zwischen dem Stopper 54 und dem Führungsstück 56 angeordnete Federelement 55 ist vorzugsweise so ausgebildet, dass die Federkonstante bzw. die Vorspannung des Federelements wählbar ist.

Die Vorrichtung ist vorzugsweise so ausgebildet, dass die maximale Kraft, welche auf das gesamte Hebelsystem wirken kann, die Federkraft des zusammengedrückten Federelements 55 nicht übersteigen kann und somit Störungen bzw. mechanische Schäden an diversen Komponenten des Hebelsystems vermieden werden.

Für den Fall, dass eine Störung im Bereich der Laufschiene 43 auftritt, wird vorgeschlagen, dass der Positionierungsrahmen in seiner Normalposition verbleibt und mittels der Federkraft eines Federelements 55 vorzugsweise automatisch nach oben gedrückt wird, sobald die Störung nicht mehr vorliegt.

Wird festgestellt, dass ein Tier nicht oder nicht vollständig ausgemolken wurde, so verbleibt das Tier am Melkplatz, hierzu wird ein Rohr 41, welches auf der schiefen Ebene 57 der Laufschiene 43 angeordnet ist, automatisch von der Normalposition "N" in eine Durchfahrposition "M" bewegt.

Durch Verwendung eines Gelenks für die Laufrolle 36 können im Bedarfsfall die beiden schiefen Ebenen 57, 58 an den Enden der Laufschiene 43 sowohl beim Vor- wie Rückwärtsfahren überfahren werden, wodurch das gesamte Hebelsystem mit Positionierungsrahmen 12 und Futterbehälter 6 in der Normalposition verbleibt.

### Bezugszeichenliste

- 1: Trennwand
- 2: Trennwand
- 3: Pfosten
- 4: Nackenrohr
- 5: Brustrohr
- 6: Futterbehälter
- 7: Verbindungselement
- 8: Tragarm
- 9: Tragarm
- 10: Bewegungseinheit
- 11: Verstärkungselement
- 12: Positionierungsrahmen
- 13: Lasche
- 14: Karussellplattform
- 15: Brücke
- 16: Befestigungsmittel
- 17: Laufschiene
- 18: Strebe
- 19: Laufrolle
- 20: Positionierungselement
- 21: Futterauffangbehälter
- 22: Tragarm
- 23: Zugseil
- 24: Betätigungseinheit/Betätigungselement
- 25: Anschlagmittel
- 26: Magnet
- 27: Sensor
- 28: Sensor
- 29: Halter
- 30: Lager
- 31: Lager
- 32: Grundplatte
- 33: Leitgerüst
- 34: Arm
- 35: Hebel
- 36: Gelenk für Laufrolle
- 37: Verbindungselement
- 38: Betätigungseinheit
- 39: Welle
- 40: Mitnehmer
- 41: Rohr
- 42: Halter
- 43: Laufschiene
- 44: Umsteuerventil
- 45: Magnetspule
- 46: Kabel
- 47: Vakuumschlauch
- 48: Vakuumschlauch
- 49: Vakuumleitung
- 50: Vakuumanschluss
- 51: Vakuumanschluss
- 52: Tragarm
- 53: Halter
- 54: Stopper
- 55: Federelement
- 56: Führungsstück
- 57: Erste schiefe Ebene
- 58: Zweite schiefe Ebene

- A: Oberer Punkt der Laufschiene
- B: unterer Punkt der Laufschiene
- C: Position Laufschiene Tier ausgemolken
- D: Position Laufschiene Tier nicht ausgemolken
- E: Abstand zwischen Sensoren 27 und 28
- D1 bis D9:: Drehpunkte bzw. Drehachsen
- F: Gelenk für Laufrolle in Position "Vorwärtsfahren"
- G: Gelenk für Laufrolle in Position "Rückwärtsfähren"
- H: Zylinderstange ausgefahren = Tiere ausgemolken
- I: Zylinderstange eingefahren = Tiere nicht ausgemolken
- J: Normalebene
- K: Entleerungsebene
- L: Hub
- M: Durchfahrposition
- N: Normalposition

## Patentansprüche

1. Vorrichtung zum Bewegen eines Positionierungsrahmens (12) sowie eines Futterbehälters (6) am Melkplatz, **dadurch gekennzeichnet, dass** wenigstens eine mit dem Positionierungsrahmen (12) oder dem Futterbehälter (6) zusammenwirkende Bewegungseinheit (10) vorgesehen ist, wobei der Positionierungsrahmen (12) und der Futterbehälter (6) über wenigstens ein Verbindungselement (7) derart miteinander verbunden sind, dass der Positionierungsrahmen (12) und der Futterbehälter (6) im wesentlichen/synchron so bewegt werden, daß der Futterbehälter (6) von einer Normalposition in eine Entherungsposition gebracht wird.

2. Vorrichtung nach Anspruch 1, **dadurch gekennzeichnet, dass** das wenigstens eine Verbindungselement (7) ein im wesentlichen starr ausgebildetes Element ist.

3. Vorrichtung nach Anspruch 1 oder 2, **dadurch gekennzeichnet, dass** die Bewegungseinheit (10) wenigstens eine Zylinder-Kolben-Einheit umfasst.

4. Vorrichtung nach Anspruch 1 oder 2, **dadurch gekennzeichnet, dass** die Bewegungseinheit (10) wenigstens eine elektromotorische Einheit, insbesondere einen Schrittmotor, umfasst.

5. Vorrichtung nach Anspruch 1 oder 2, **dadurch gekennzeichnet, dass** die Bewegungseinheit (10) wenigstens eine Laufschiene (17) und wenigstens eine mit der mindestens einen Laufschiene (17) zusammenwirkende Laufrolle (19) umfasst.

6. Vorrichtung nach Anspruch 5, **dadurch gekennzeichnet, dass** die Laufschiene (17) einen ersten nach unten geneigten Abschnitt, einen zweiten, im wesentlichen horizontal ausgebildeten Abschnitt und einen dritten nach oben steigenden Abschnitt aufweist.

7. Vorrichtung nach Anspruch 5 oder 6, **dadurch gekennzeichnet, dass** eine Betätigungseinheit (24) vorgesehen ist, mittels welcher die mindestens eine Laufschiene (17) und/oder die wenigstens eine Laufrolle (19) in Eingriff oder außer Eingriff bringbar sind.

8. Vorrichtung nach Anspruch 7, **dadurch gekennzeichnet, dass** die Betätigungseinheit (24) eine Zylinder-Kolben-Einheit umfasst.

9. Vorrichtung nach Anspruch 7 oder 8, **dadurch gekennzeichnet, dass** die Laufschiene (17) auslenkbar angeordnet ist.

10. Vorrichtung nach einem der Ansprüche 1 bis 9, **dadurch gekennzeichnet, dass** eine Steuerung vorgesehen ist, welche mit der Bewegungseinheit (10) signaltechnisch verbunden ist.

11. Melkplatz umfassend eine Vorrichtung zum Bewegen eines Positionierungsrahmens (12) sowie eines Futterbehälters (6) am Melkplatz, **dadurch gekennzeichnet, dass** wenigstens eine mit dem Positionierungsrahmen (12) oder dem Futterbehälter (6) zusammenwirkende Bewegungseinheit (10) vorgesehen ist, wobei der Positionierungsrahmen (12) und der Futterbehälter (6) über wenigstens ein Verbindungselement (7) derart miteinander verbunden sind, dass der Positionierungsrahmen (12) und der Futterbehälter (6) im wesentlichen synchron so bewegt werden, daß der Futterbehälter (6) von einer Normalposition in eine Entleerungsposition gebracht wird.

12. Melkplatz nach Anspruch 11, **dadurch gekennzeichnet, dass** die Vorrichtung nach einem der Ansprüche 2 bis 10 ausgebildet ist.

13. Karussellmelkvorrichtung mit einer Karussellplattform (14) und mit auf der Karussellplattform (14) angeordneten Melkplätzen, **dadurch gekennzeichnet, dass** wenigstens ein Melkplatz eine Vorrichtung zum Bewegen eines Positionierungsrahmens (12) sowie eines Futterbehälters (6) am Melkplatz aufweist, wobei wenigstens eine mit dem Positionierungsrahmen (12) oder dem Futterbehälter (6) zusammenwirkende Bewegungseinheit (10) vorgesehen ist, wobei der Positionierungsrahmen (12) und der Futterbehälter (6) über wenigstens ein Verbindungselement (7) derart miteinander verbunden sind, dass der Positionierungsrahmen (12) und der Futterbehälter (6) im wesentlichen synchron so bewegt werden, daß der Futterbehälter (6) von einer Normalposition in eine Entleerungsposition gebracht wird.

14. Karussellmelkvorrichtung nach Anspruch 13, **dadurch gekennzeichnet, dass** die Vorrichtung zum Bewegen eines Positionierungsrahmens (12) sowie eines Futterbehälters (6) am Melkplatz nach einem der Ansprüche 2 bis 10 ausgebildet ist.

15. Karussellmelkvorrichtung nach Anspruch 13 oder 14, **dadurch gekennzeichnet, dass** wenigstens eine Sensoreinheit (27, 28) im Ein- und/oder im Ausgangsbereich der Karussellmelkvorrichtung vorgesehen ist, welche signaltechnisch mit einer speziellen Steuerung für die Betätigungseinheit 24 verbunden ist.

16. Karussellmelkanlage nach Anspruch 13, 14 oder 15, **dadurch gekennzeichnet, dass** die Laufschiene (17) im Wesentlichen im Ein- und Ausgangsbereich der Karussellmelkvorrichtung vorgesehen ist.

17. Karussellmelkvorrichtung nach Anspruch 16, **dadurch gekennzeichnet, dass** die Laufschiene (17) im Wesentlichen wendelförmig ausgebildet ist.

## Claims

1. A device for moving a positioning frame (12) and feed container (6) at a milking station, **characterized in that** at least one movement unit (10) which interacts with the positioning frame (12) or the feed container (6) is provided, the positioning frame (12) and the feed container (6) being connected to each other via at least one connecting element (7) in such a manner that the positioning frame (12) and the feed container (6) are moved substantially synchronously, such that the feed container (6) is moved from a normal position into a emptying position.

2. The device as claimed in claim 1, **characterized in that** the at least one connecting element (7) is an element of substantially rigid design.

3. The device as claimed in claim 1 or 2, **characterized in that** the movement unit (10) comprises at least one cylinder-piston unit.

4. The device as claimed in claim 1 or 2, **characterized in that** the movement unit (10) comprises at least one electric motor unit, in particular a stepping motor.

5. The device as claimed in claim 1 or 2, **characterized in that** the movement unit (10) comprises at least one roller rail (17) and at least one roller (19) interacting with the at least one roller rail (17).

6. The device as claimed in claim 5, **characterized in that** the roller rail (17) has a first, downwardly inclined section, a second section of substantially horizontal design and a third, upwardly rising section.

7. The device as claimed in claim 5 or 6, **characterized in that** an actuating unit (24) is provided, by means of which the at least one roller rail (17) and/or the at least one roller (19) can be brought into or out of engagement.

8. The device as claimed in claim 7, **characterized in that** the actuating unit (24) comprises a cylinder-piston unit.

9. The device as claimed in claim 7 or 8, **characterized in that** the roller rail (17) is arranged in a manner such that it can be deflected.

10. The device as claimed in one of claims 1 to 9, **characterized in that** a controller which is connected to the movement unit (10) by signaling technology is provided.

11. A milking station comprising a device for moving a positioning frame (12) and feed container (6) at the milking station, **characterized in that** at least one movement unit (10) which interacts with the positioning frame (12) or the feed container (6) is provided, the positioning frame (12) and the feed container (6) being connected to each other via at least one connecting element (7) in such a manner that the positioning frame (12) and the feed container (6) are moved substantially synchronously, such that the feed container (6) is moved from a normal position into a emptying position.

12. The milking station as claimed in claim 11, **characterized in that** the device is designed as claimed in one of claims 2 to 10.

13. A carousel milking device with a carousel platform (14) and with milking stations arranged on the carousel platform (14), **characterized in that** at least one milking station has a device for moving a positioning frame (12) and feed container (6) at the milking station, at least one movement unit (10) which interacts with the positioning frame (12) or the feed container (6) being provided, the positioning frame (12) and the feed container (6) being connected to each other via at least one connecting element (7) in such a manner that the positioning frame (12) and the feed container (6) are moved substantially synchronously, such that the feed container (6) is moved from a normal position into a emptying position.

14. The carousel milking device as claimed in claim 13, **characterized in that** the device for moving a positioning frame (12) and feed container (6) at a milking station is designed as claimed in one of claims 2 to 10.

15. The carousel milking device as claimed in claim 13 or 14, **characterized in that** at least one sensor unit (27, 28) is provided in the entry and/or in the exit region of the carousel milking device, said sensor unit being connected by signaling technology to a special controller for the actuating unit (24).

16. The carousel milking facility as claimed in claim 13, 14 or 15, **characterized in that** the roller rail (17) is substantially provided in the entry and exit region of the carousel milking device.

17. The carousel milking device as claimed in claim 16, **characterized in that** the roller rail (17) is of substantially helical design.

## Revendications

1. Dispositif de déplacement d'un cadre de positionnement (12) ainsi que d'un récipient à fourrage (6) sur un poste de traite de lait, **caractérisé en ce qu'**il est prévu au moins une unité de déplacement (10) coopérant avec le cadre de positionnement (12) ou avec le récipient à fourrage (6), dans lequel le cadre de positionnement (12) et le récipient à fourrage (6) sont reliés l'un à l'autre au moyen d'au moins un élément de liaison (7), de telle manière que le cadre de positionnement (12) et le récipient à fourrage (6) se déplacent de manière essentiellement synchrone, de telle manière que le récipient à fourrage (6) soit amené d'une position normale à une position de vidange.

2. Dispositif selon la revendication 1, **caractérisé en ce que** ledit au moins un élément de liaison (7) est un élément essentiellement rigide.

3. Dispositif selon la revendication 1 ou 2, **caractérisé en ce que** l'unité de déplacement (10) comprend au moins une unité de piston-cylindre.

4. Dispositif selon la revendication 1 ou 2, **caractérisé en ce que** l'unité de déplacement (10) comprend au moins une unité de moteur électrique, en particulier un moteur pas à pas.

5. Dispositif selon la revendication 1 ou 2, **caractérisé en ce que** l'unité de déplacement (10) comprend au moins un rail de roulement (17) et au moins un galet de roulement (19) coopérant avec ledit au moins un rail de roulement (17).

6. Dispositif selon la revendication 5, **caractérisé en ce que** le rail de roulement (17) présente une première section inclinée vers le bas, une deuxième section essentiellement horizontale et une troisième section remontant vers le haut.

7. Dispositif selon la revendication 5 ou 6, **caractérisé en ce qu'**il est prévu une unité d'actionnement (24), au moyen de laquelle ledit au moins un rail de roulement (17) et/ou ledit au moins un galet de roulement (19) peuvent être mis en prise ou hors de prise l'un avec l'autre.

8. Dispositif selon la revendication 7, **caractérisé en ce que** l'unité d'actionnement (24) comprend une unité de piston-cylindre.

9. Dispositif selon la revendication 7 ou 8, **caractérisé en ce que** le rail de roulement (17) est disposé de façon à pouvoir être dévié.

10. Dispositif selon l'une quelconque des revendications 1 à 9, **caractérisé en ce qu'**il est prévu une commande, qui est reliée par la technique de signalisation à l'unité de déplacement (10).

11. Poste de traite de lait comprenant un dispositif de déplacement d'un cadre de positionnement (12) ainsi que d'un récipient à fourrage (6) sur le poste de traite de lait, **caractérisé en ce qu'**il est prévu au moins une unité de déplacement (10) coopérant avec le cadre de positionnement (12) ou avec le récipient à fourrage (6), dans lequel le cadre de positionnement (12) et le récipient à fourrage (6) sont reliés l'un à l'autre au moyen d'au moins un élément de liaison (7), de telle manière que le cadre de positionnement (12) et le récipient à fourrage (6) se déplacent de manière essentiellement synchrone, de telle manière que le récipient à fourrage (6) soit amené d'une position normale à une position de vidange.

12. Poste de traite de lait selon la revendication 11, **caractérisé en ce que** le dispositif est réalisé selon l'une quelconque des revendications 2 à 10.

13. Dispositif de traite tournant avec une plate-forme tournante (14) et avec des postes de traite de lait disposés sur la plate-forme tournante (14), **caractérisé en ce qu'**au moins un poste de traite de lait présente un dispositif de déplacement d'un cadre de positionnement (12) ainsi que d'un récipient à fourrage (6), dans lequel il est prévu au moins une unité de déplacement (10) coopérant avec le cadre de positionnement (12) ou avec le récipient à fourrage (6), dans lequel le cadre de positionnement (12) et le récipient à fourrage (6) sont reliés l'un à l'autre au moyen d'au moins un élément de liaison (7), de telle manière que le cadre de positionnement (12) et le récipient à fourrage (6) se déplacent de manière essentiellement synchrone, de telle manière que le récipient à fourrage (6) soit amené d'une position normale à une position de vidange.

14. Dispositif de traite tournant selon la revendication 13, **caractérisé en ce que** le dispositif de déplacement d'un cadre de positionnement (12) ainsi que d'un récipient à fourrage (6) au poste de traite de lait est réalisé selon l'une quelconque des revendications 2 à 10.

15. Dispositif de traite tournant selon la revendication 13 ou 14, **caractérisé en ce qu'**il est prévu au moins une unité de capteur (27, 28) dans la région d'entrée et/ou de sortie du dispositif de traite tournant, qui est reliée par la technique de signalisation à une commande spéciale pour l'unité d'actionnement (24).

16. Dispositif de traite tournant selon la revendication 13, 14 ou 15, **caractérisé en ce que** le rail de roulement (17) est prévu essentiellement dans la région d'entrée et de sortie du dispositif de traite tournant.

17. Dispositif de traite tournant selon la revendication 16, **caractérisé en ce que** le rail de roulement (17) est réalisé essentiellement en forme d'hélice.
